# EUROPÄISCHE PATENTSCHRIFT

(11) **EP 3 432 450 B1**
(45) Veröffentlichungstag und Bekanntmachung des Hinweises auf die Patenterteilung: **29.09.2021**
(21) Anmeldenummer: 17182597.9
(22) Anmeldetag: 21.07.2017
(51) Int. Cl.: H02K 3/30, H02K 3/34

(54) **FORMSPULE MIT VORHERIGER BEWICKLUNG MIT GLIMMERBAND**
FORM COIL WITH PRIOR WINDING PROCESS WITH MICA TAPE
BOBINE PRÉFORMÉE COMPRENANT UN ENROULEMENT ANTÉRIEUR AVEC BANDE DE CAOUTCHOUC

(43) Veröffentlichungstag der Anmeldung: 23.01.2019
(73) Patentinhaber: Siemens Mobility GmbH, 81739 München (DE)
(72) Erfinder: Schemmel, Florian, 90455 Nürnberg (DE); Hösle, Markus, 91058 Erlangen (DE); Schultheiß, Christoph, 91126 Schwabach (DE)

(56) Entgegenhaltungen:
- CH-A5- 559 451
- JP-A- H02 156 605
- JP-A- S60 237 828
- US-A- 2 479 357
- Garnier: "NIPPNRIKA", , 25. April 2017 (2017-04-25), Seiten 1-15, XP055439671, Gefunden im Internet: URL:http://www.fiee.com.br/__novadocuments /354804?v=636287423822970000 [gefunden am 2018-01-10]

## Beschreibung

Formspule mit vorheriger Bewicklung mit Glimmerband Die vorliegende Erfindung geht aus von einer Spule einer Statorwicklung einer elektrischen Maschine,
- wobei die Spule gemäß den Merkmalen des Anspruchs 1 definiert ist.

Die vorliegende Erfindung geht weiterhin aus von einer elektrischen Maschine, wobei die elektrische Maschine einen Stator und einen Rotor aufweist, wobei der Stator Statornuten aufweist, in die eine Statorwicklung eingebracht ist, wobei die Statorwicklung Spulen aufweist, wobei mindestens eine der Spulen als Spule wie obenstehend beschrieben ausgebildet ist.

Die vorliegende Erfindung geht weiterhin aus von einem elektrischen Antrieb, wobei der Antrieb eine derartige elektrische Maschine, einen Umrichter und eine Steuereinrichtung für den Umrichter aufweist, wobei die elektrische Maschine von der Steuereinrichtung über den Umrichter an eine Versorgungsspannung anschaltbar ist, die größer als 350 V ist, insbesondere größer als 1,0 kV, beispielsweise bis zu 4,5 kV.

Die vorliegende Erfindung geht weiterhin aus von einem Schienenfahrzeug, wobei das Schienenfahrzeug als Traktionsantrieb einen derartigen elektrischen Antrieb aufweist.

Bei elektrischen Maschinen werden auf die Spulen der Statorwicklung zur Hauptisolation eine oder mehrere Lagen an Glimmerband aufgebracht. Dies erfolgt unter anderem, um die Nässeresistenz und die Wärmeklasse der Spule zu steigern. Insbesondere bei elektrischen Maschinen, die als Traktionsantrieb von Schienenfahrzeugen verwendet werden, wird dieser Aufbau zusätzlich durch eine Lage eines Gewebe-Deckbandes vor mechanischen Einflüssen geschützt. Das Gewebe-Deckband weist ausschließlich eine mechanische Schutzfunktion auf. Die Nässeresistenz und die Wärmeklasse der Hauptisolierung werden hingegen maßgeblich durch die Anzahl an Lagen an Glimmerband bestimmt.

Bei als Formspulen ausgebildeten Spulen ist es bekannt, zunächst eine plane Spule zu fertigen, die aufgrund ihrer Form üblicherweise als race track-Schleife (zwei lange Geraden, die über zwei halbkreisförmig gebogene Abschnitte miteinander verbunden sind) bezeichnet wird. Diese Spule wird sodann durch einen Formgebungsprozess in die Formspule umgeformt. Bei derartigen Formspulen ist es weiterhin bekannt, die Lagen an Glimmerband nach dem Formen der (dreidimensionalen) Formspule auf die Spule aufzubringen. Dieser Vorgang erfolgt in der Regel manuell. Das manuelle Aufbringen des Glimmerbandes ist zeitaufwendig und fehlerträchtig.

Es ist bereits versucht worden, die Lagen an Glimmerband vor dem Formen der dreidimensionalen Formspule auf die dann noch plane Spule aufzubringen und die bereits mit Glimmerband (und gegebenenfalls auch dem Deckband) bewickelte plane Spule zur Formspule zu formen. Diese Vorgehensweise ist als Flattechnik bekannt. Bei Spulen für elektrische Antriebe, die bei "normalen" Anwendungen eingesetzt werden, hat sich diese Vorgehensweise als machbar erwiesen. Für Traktionsantriebe und ähnliche Anwendungen, bei denen die elektrische Maschine des Antriebs rauen Umweltbedingungen ausgesetzt ist, war es bisher jedoch nicht möglich, auf diese Weise Formspulen herzustellen, die in der Praxis die erforderliche Zuverlässigkeit - insbesondere Nässeresistenz - aufweisen.

Das Dokument CH 559 451 A5 offenbart eine windungsisolierte Spule für eine elektrische Maschine mit einem um einen Leiter gewickelten, sich teilweise überlappenden, tränkbaren Isoliermaterial, wobei das Isoliermaterial bandförmig ist und mindestens eine Glimmerschicht enthält und wobei auf beiden Seiten des Bandes eine Kunststoff-Folie vorgesehen ist. Das Isolierband schützt das Isoliermaterial, vor allem die Feinglimmerschicht, und ermöglicht damit beim Biegen des Leiters wegen der beidseitigen Abdeckung mit einer glatten Folie ein schuppenartiges Aufeinandergleiten benachbarter sich überlappender Isolierbandagen. Das Dokument US 2 479 357 A offenbart ein Verfahren zur Herstellung einer elektrischen Isolation von Spulen, wobei die Isolation mehrschichtig mit einem Glimmerband sowie einer faserförmigen Verstärkungsschicht ausgestaltet ist.

Die Aufgabe der vorliegenden Erfindung besteht darin, Möglichkeiten zur Verfügung zu stellen, mittels derer auf einfache und kostengünstige Weise Formspulen, elektrische Maschinen und Antriebe geschaffen werden können, die insbesondere für eine Verwendung bei Traktionsantrieben geeignet sind. Die Aufgabe wird durch eine Spule mit den Merkmalen des Anspruchs 1 gelöst. Vorteilhafte Ausgestaltungen der Spule sind Gegenstand der abhängigen Ansprüche 2 und 3.

Erfindungsgemäß wird eine Spule der eingangs genannten Art dadurch ausgestaltet, dass das Glimmerband eine Biegesteifigkeit nach DIN EN 60371-2 (Stand 2005) von unter 50 N/m und zwischen seiner Oberseite und seiner Unterseite einen Haftreibungskoeffizienten nach DIN EN ISO 8295 (Stand 2004) von unter 0,7 aufweist.

Durch die Verwendung eines derart flexiblen Glimmerbandes wird erreicht, dass das Glimmerband sich beim Bewickeln der noch planen Spule nahezu faltenfrei an die noch plane Spule anlegt. Dadurch ist es möglich, dass die Lagen an Glimmerband sich beim Formen der planen Spule zur Formspule gegeneinander verschieben können, ohne dass Lagen an Falten hängen bleiben. Durch die Verwendung eines Glimmerbandes mit entsprechenden Haftreibungskoeffizienten wird erreicht, dass die Lagen des Glimmerbandes sich beim Formen der Spule zur Formspule in reproduzierbarer Weise gegeneinander verschieben. Insbesondere kann durch die Kombination dieser beiden Eigenschaften somit erreicht werden, dass beim Formen der Spule zur Formspule keine Lücken entstehen, dass also die eigentliche Spule (= die Anzahl an Windungen von metallischen Leitern, meist Leitern aus flachem Kupferband) überall zuverlässig noch von einer hinreichenden Anzahl an Lagen des Glimmerbandes abgedeckt bleiben.

Erfindungsgemäß weist das Deckband zwischen seiner Oberseite und seiner Unterseite einen Haftreibungskoeffizienten nach DIN EN ISO 8295 (Stand 2004) von unter 0,7 auf. Dabei kann das Deckband und das Glimmerband derart aufeinander abgestimmt sein, dass das Deckband zum Glimmerband hin einen Haftreibungskoeffizienten nach DIN EN ISO 8295 (Stand 2004) von unter 0,7 aufweist.

Vorzugsweise sind das Glimmerband und die Anzahl an Lagen des Glimmerbandes derart aufeinander abgestimmt, dass die Spule eine Wärmeklasse von 200°C oder besser nach IEC 60034-18-31 (Stand 2017) aufweist. Dies stellt eine Verbesserung gegenüber dem Stand der Technik dar, bei dem typischerweise eine Wärmeklasse von 180°C erreichbar ist. Es ist ohne weiteres eine Wärmeklasse von 220°, in manchen Fällen sogar eine Wärmeklasse von 250° realisierbar.

Erfindungsgemäß weist das Deckband in sich zwei Schichten auf, wobei je eine dieser beiden Schichten ein Gewebe und eine Folie ist, das Gewebe aus einer Glasfaser oder aus einem ersten Hochleistungspolymer besteht und die Folie aus einem zweiten Hochleistungspolymer besteht. Durch diese Ausgestaltung kann erreicht werden, dass Deckband nicht nur eine mechanische, sondern - wenn auch nur in relativ geringem Umfang - eine elektrische Schutzfunktion bewirkt und dennoch eine hohe Wärmeklasse realisiert werden kann. Das zweite Hochleistungspolymer kann insbesondere ein Polyimid sein. In der Regel ist hierbei das Gewebe von den Schichten des Glimmerbandes abgewandt, die Folie den Schichten des Glimmerbandes zugewandt.

Die Aufgabe wird weiterhin durch eine elektrische Maschine mit den Merkmalen des Anspruchs 4 gelöst. Erfindungsgemäß ist bei einer elektrischen Maschine der eingangs genannten Art mindestens eine der Spulen erfindungsgemäß ausgebildet.

Die Aufgabe wird weiterhin durch einen elektrischen Antrieb mit den Merkmalen des Anspruchs 5 gelöst. Erfindungsgemäß ist die elektrische Maschine des elektrischen Antriebs erfindungsgemäß ausgebildet.

Die Aufgabe wird weiterhin durch ein Schienenfahrzeug mit den Merkmalen des Anspruchs 6 gelöst. Erfindungsgemäß weist das Schienenfahrzeug als Traktionsantrieb einen erfindungsgemäßen elektrischen Antrieb auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Schienenfahrzeug,
- FIG 2: einen elektrischen Antrieb
- FIG 3: eine elektrische Maschine,
- FIG 4: einen Stator einer elektrischen Maschine und eine Spule,
- FIG 5: einen Querschnitt durch eine Spule,
- FIG 6: eine Abfolge von Schichten von Bändern,
- FIG 7: eine Draufsicht auf eine Oberseite eines Deckbandes,
- FIG 8: eine Draufsicht auf eine Unterseite eines Deckbandes,
- FIG 9: ein Ablaufdiagramm und
- FIG 10: eine plane Spule.

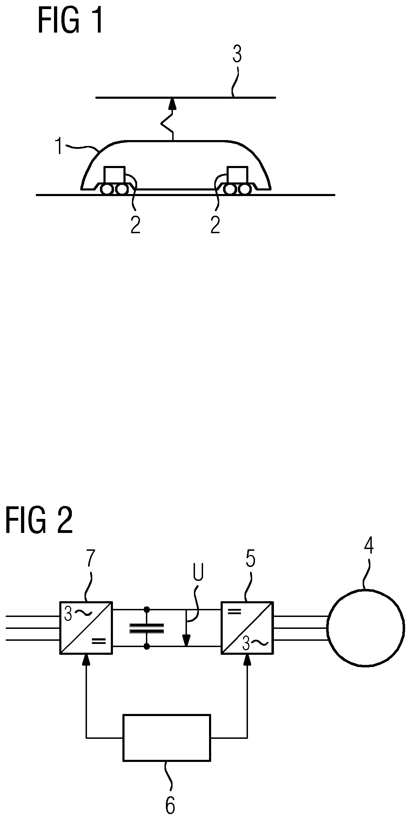

Gemäß FIG 1 weist ein Schienenfahrzeug 1 (beispielsweise eine Elektrolok) mindestens einen Traktionsantrieb 2 auf. Der Traktionsantrieb 2 wird gemäß FIG 1 über eine Oberleitung 3 mit elektrischer Energie versorgt. Es ist jedoch auch eine andere Art der Versorgung denkbar, beispielsweise über einen Dieselantrieb, der einen elektrischen Generator antreibt.

Der Traktionsantrieb 2 ist ein Beispiel eines elektrischen Antriebs. In Verbindung mit dem Traktionsantrieb 2 wird die vorliegende Erfindung nachstehend erläutert. Der elektrische Antrieb könnte jedoch auch für andere Zwecke verwendet werden. Nachstehend werden daher nur allgemein die Bezeichnung "Antrieb" verwendet und weiterhin das Bezugszeichen 2 verwendet.
Der elektrische Antrieb 2 weist gemäß FIG 2 eine elektrische Maschine 4, einen Umrichter 5 und eine Steuereinrichtung 6 für den Umrichter 5 auf. In vielen Fällen ist dem Umrichter 5 weiterhin ein Gleichrichter 7 vorgeordnet. Dies ist jedoch nicht zwingend erforderlich. Von der Steuereinrichtung 6 ist die elektrische Maschine 4 über den Umrichter 5 an eine Versorgungsspannung U anschaltbar. Falls der Gleichrichter 7 vorhanden ist und steuerbar ist, erfolgt die Steuerung des Gleichrichters 7 in der Regel ebenfalls durch die Steuereinrichtung 6.

Die Versorgungsspannung U - also diejenige Spannung, welche an die Motorklemmen der elektrischen Maschine 4 angelegt wird - ist in der Regel größer als 350 V, insbesondere meist größer als 1 kV. Sie kann sogar größer als 1,0 kV sein, beispielsweise zwischen 2 kV und 3 kV liegen. In manchen Fällen kann sie bis zu 4,5 kV betragen.

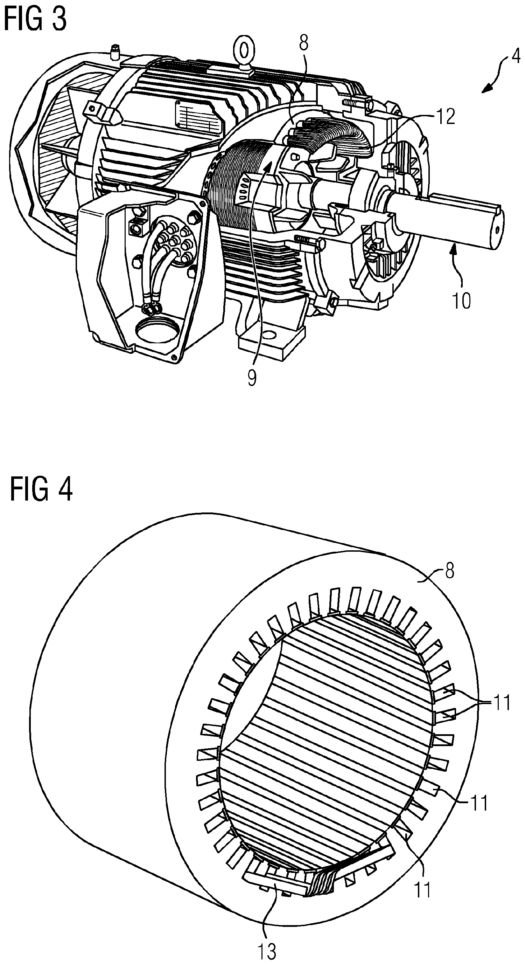

Die elektrische Maschine weist gemäß FIG 3 einen Stator 8 und einen Rotor 9 auf. Der Rotor 9 ist auf einer Rotorwelle 10 drehfest angeordnet, die ihrerseits um eine Rotationsachse rotierbar ist. Der Stator 8 weist gemäß den FIG 3 und 4 Statornuten 11 auf. In die Statornuten 11 ist eine Statorwicklung 12 (siehe FIG 3) eingebracht. Die Statorwicklung 12 weist Spulen 13 (siehe FIG 4) auf, wobei in FIG 4 der Übersichtlichkeit halber nur eine der Spulen 13 dargestellt ist. Die Ausgestaltung der Spule 13 ist der eigentliche Gegenstand der vorliegenden Erfindung.

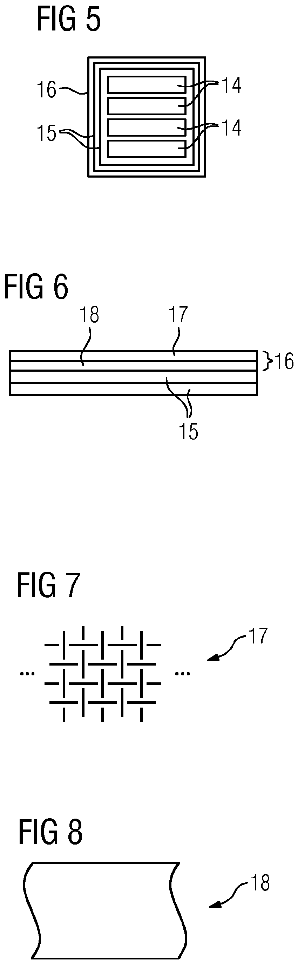

Die Spule 13 besteht gemäß FIG 5 aus einer Anzahl von Windungen 14. Die Windungen 14 bestehen üblicherweise aus Kupfer, oftmals aus Kupferband. In jedem Fall aber sind die Windungen 14 mit einer nicht eigens dargestellten elektrischen Isolierung versehen, beispielsweise einem Schutzlack. Die Anzahl an Windungen 14 kann nach Bedarf sein. Die in FIG 5 dargestellte Anzahl von vier Windungen 14 ist rein beispielhaft.

Die Windungen 14 sind gemäß FIG 5 - und zwar nicht einzeln, sondern gemeinsam - mit einer Anzahl von Schichten eines Glimmerbandes 15 bewickelt. Die Anzahl an Schichten des Glimmerbandes 15 kann 1 sein. Oftmals ist sie größer als 1. Die in FIG 5 dargestellte Anzahl von zwei Schichten ist jedoch rein beispielhaft. Auf die Schichten an Glimmerband 15 - genau genommen auf die äußerste Schicht an Glimmerband 15 - ist eine Anzahl von Schichten eines Deckbandes 16 gewickelt. Die Anzahl an Schichten des Deckbandes 16 kann größer als 1 sein. In der Regel ist jedoch nur eine Schicht an Deckband 16 gewickelt. Das Deckband 16 ist in der Regel die äußerste Schicht der fertigen Spule 13. Nach dem Bewickeln der Spule 13 mit dem Deckband 16 wird also die fertige Spule 13 in den Stator 9 bzw. genauer in zwei der Statornuten 11 eingesetzt.

Falls die Spule 13 in der sogenannten Flattechnik hergestellt wird, sollte das Glimmerband 15 eine möglichst hohe Biegsamkeit und einen möglichst geringen Haftreibungskoeffizienten zwischen Oberseite und Unterseite aufweisen. Insbesondere sollte die Biegesteifigkeit nach DIN EN 60371-2 (Stand 2005) unter 50 N/m liegen. Der Haftreibungskoeffizient (definiert in derselben Norm) sollte unter 0,7 liegen. Beispiele geeigneter Glimmerbänder sind RikaFibrel E364N und RikaFibrel E464N der Nippon Rika Group.

Es ist möglich, dass das Glimmerband 15 die obengenannten Materialeigenschaften permanent aufweist. Zumindest zum Zeitpunkt der Herstellung der Spule 13 müssen die Materialeigenschaften des Glimmerbandes 15 jedoch gegeben sein. Insbesondere der Haftreibungskoeffizient kann zum Zeitpunkt der Herstellung der Spule 13 auch durch eine Fett- oder Ölschicht zwischen den Schichten des Glimmerbandes 15 bewirkt werden. Eine derartige Fett- oder Ölschicht ist jedoch auch nach der Herstellung der Spule 13 noch vorhanden, verflüchtigt sich also erst nach einem längeren Zeitraum, so dass auch bei Applikationen einer Fett- oder Ölschicht der entsprechende Haftreibungskoeffizient als Materialeigenschaft des Glimmerbandes 15 angesehen werden kann.
Vorzugsweise gelten die obigen Ausführungen zum Glimmerband 15 auch für das Deckband 16. Vorzugsweise weist also auch das Deckband 16 zwischen seiner Oberseite und seiner Unterseite einen Haftreibungskoeffizienten nach DIN EN ISO 8295 (Stand 2004) von unter 0,7 auf. Weiterhin sind vorzugsweise das Deckband 16 und das Glimmerband 15 derart aufeinander abgestimmt, dass das Deckband 16 zum Glimmerband 15 hin einen derartigen Haftreibungskoeffizienten aufweist. Die obigen Aussagen zur Applikation von Fett- und Ölschichten sind auch hier gültig.

Das Deckband 16 ist gemäß den FIG 6 bis 8 vorzugsweise als Laminat ausgebildet, das eine Abfolge von zwei Schichten 17, 18 aufweist. Je eine dieser beiden Schichten 17, 18 ist ein Gewebe 17 und eine Folie 18. Weitere Bestandteile enthält das Deckband 16 nicht. Die Folie 18 grenzt also unmittelbar an das Gewebe 17 an. In der Regel ist das Gewebe 17 von den Schichten des Glimmerbandes 15 abgewandt und hiermit korrespondierend die Folie 18 den Schichten des Glimmerbandes 15 zugewandt. Prinzipiell ist jedoch auch die umgekehrte Abfolge von Gewebe 17 und Folie 18 möglich.

Das Gewebe 17 besteht vorzugsweise aus einer Glasfaser. Alternativ kann es aus einem ersten Hochleistungspolymer bestehen. Das erste Hochleistungspolymer kann ein Polyimid sein, ist aber vorzugsweise ein Aramid, insbesondere ein meta(m)-Aramid oder ein para(p)-Aramid. Die Folie 18 besteht aus einem zweiten Hochleistungspolymer. Das zweite Hochleistungspolymer kann ein Aramid sein, insbesondere ein meta(m)-Aramid oder ein para(p)-Aramid. Vorzugsweise ist das zweite Hochleistungspolymer jedoch ein Polyimid. Ein Beispiel eines geeigneten Deckbandes 16 ist Voltaflex GK2797 der Isovolta AG.

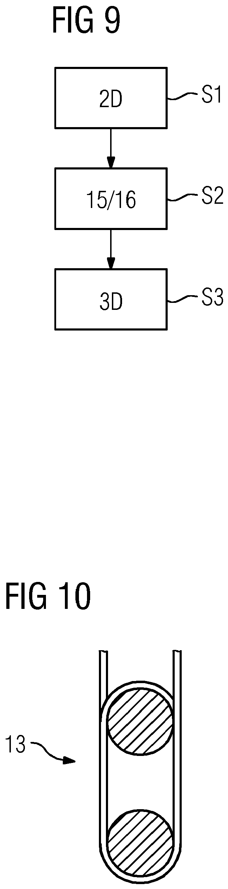

Erfindungsgemäß ist die Spule 13, wie in FIG 4 erkennbar ist, als dreidimensionale Formspule ausgebildet. Erfindungsgemäß wird weiterhin entsprechend der Darstellung in FIG 9 die Spule 13 zunächst in einem Schritt S1 als plane Spule gewickelt. Dies ist im Schritt S1 durch die Angabe "2D" angedeutet. Die plane Spule ist rein beispielhaft in FIG 10 dargestellt. Danach werden in einem Schritt S2 auf die plane Spule, also vor dem Verformen zur Formspule, die Schichten an Glimmerband 15 und Deckband 16 aufgebracht. Dies ist im Schritt S2 durch die Angabe "15, 16" angedeutet. Erst danach wird in einem Schritt S3 die bereits bewickelte flache Spule zur dreidimensionalen Formspule geformt. Dies ist im Schritt S3 durch die Angabe "3D" angedeutet.

Bei dem Formgebungsprozess (Schritt S3) verschieben sich die Schichten des Glimmerbandes 15 untereinander und/oder die Schichten des Deckbandes 16 gegeneinander. In manchen Fällen verschieben sich auch die an die äußerste Schicht des Glimmerbandes 15 angrenzende innerste Schicht des Deckbandes 16 gegeneinander. Die Verschiebungen sind ein sich durch den Herstellungsprozess ergebendes konstruktives Merkmal der Spulen 13.

Mit einer einzelnen Lage an Glimmerband 15 kann eine bestimmte Wärmeklasse nach IEC 60034-18-31(Stand 2017) erreicht werden. Jede weitere Lage an Glimmerband 15 erhöht die Wärmeklasse. Vorzugsweise sind das Glimmerband 15 und die Anzahl an Lagen des Glimmerbandes 15 derart aufeinander abgestimmt, dass die Spule 13 eine Wärmeklasse von 200°C oder besser (gemäß der genannten Norm) aufweist.

Zusammengefasst betrifft die vorliegende Erfindung somit folgenden Sachverhalt:
Eine Spule 13 einer Statorwicklung 12 einer elektrischen Maschine 4 besteht aus einer Anzahl von Windungen 14, die gemeinsam mit einer Anzahl von Schichten eines Glimmerbandes 15 bewickelt sind, auf die wiederum eine Anzahl von Schichten eines Deckbandes 16 gewickelt ist. Die Spule 13 ist als dreidimensionale Formspule ausgebildet. Das Glimmerband 15 weist eine Biegesteifigkeit nach DIN EN 60371-2 Stand 2005 von unter 50 N/m und zwischen seiner Oberseite und seiner Unterseite einen Haftreibungskoeffizienten nach DIN EN ISO 8295 Stand 2004 von unter 0,7 auf.

Die vorliegende Erfindung weist viele Vorteile auf. Insbesondere können für Traktionsantriebe 2 und ähnliche Anwendungsfälle erstmals elektrische Maschinen 4 mit Formspulen 13 verwendet werden, die vor dem dreidimensionalen Formgebungsprozess mit Glimmerband 15 und Deckband 16 bewickelt werden. Die Nässeresistenz und der Temperaturindex werden signifikant verbessert. Insbesondere lässt sich eine Wärmeklasse von 200°C oder besser erreichen. Weiterhin wird auch der mechanische Schutz verbessert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Spule einer Statorwicklung (12) einer elektrischen Maschine (4),
- wobei die Spule eine plane Spule ist, die aus einer Anzahl von Windungen (14) besteht, die gemeinsam mit einer Anzahl von Schichten eines Glimmerbandes (15) bewickelt sind, auf die wiederum eine Anzahl von Schichten eines Deckbandes (16) gewickelt ist, wobei
- die so bewickelte plane Spule anschließend als dreidimensionale Formspule ausgebildet ist,
- das Glimmerband (15) eine Biegesteifigkeit nach DIN EN 60371-2 (Stand 2005) von unter 50 N/m und zwischen seiner Oberseite und seiner Unterseite einen Haftreibungskoeffizienten nach DIN EN ISO 8295 (Stand 2004) von unter 0,7 aufweist, und
- das Deckband (16) zwischen seiner Oberseite und seiner Unterseite einen Haftreibungskoeffizienten nach DIN EN ISO 8295 (Stand 2004) von unter 0,7 aufweist, und das Deckband (16) und das Glimmerband (15) derart aufeinander abgestimmt sind, dass das Deckband (16) zum Glimmerband (15) hin einen Haftreibungskoeffizienten nach DIN EN ISO 8295 (Stand 2004) von unter 0,7 aufweist, wobei das Deckband (16) in sich zwei Schichten (17, 18) aufweist, dass je eine dieser beiden Schichten (17, 18 ein Gewebe (17) und eine Folie (18) ist und dass das Gewebe (17) aus einer Glasfaser oder aus einem ersten Hochleistungspolymer besteht und die Folie (18) aus einem zweiten Hochleistungspolymer besteht.

2. Spule nach Anspruch 1,
**dadurch gekennzeichnet,**
**dass** das Glimmerband (15) und die Anzahl an Lagen des Glimmerbandes (15) derart aufeinander abgestimmt sind, dass die Spule eine Wärmeklasse von 200°C oder besser nach IEC 60034-18-31 (Stand 2017) aufweist.

3. Spule nach Anspruch 1,
**dadurch gekennzeichnet,**
**dass** das zweite Hochleistungspolymer ein Polyimid ist.

4. Elektrische Maschine, wobei die elektrische Maschine einen Stator (8) und einen Rotor (9) aufweist, wobei der Stator (8) Statornuten (11) aufweist, in die eine Statorwicklung (12) eingebracht ist, wobei die Statorwicklung (12) Spulen (13) aufweist, wobei mindestens eine der Spulen (13) als Spule nach einem der Ansprüche 1 bis 3 ausgebildet ist.

5. Elektrischer Antrieb, wobei der elektrische Antrieb eine elektrische Maschine (4) nach Anspruch 4, einen Umrichter (5) und eine Steuereinrichtung (6) für den Umrichter (5) aufweist, wobei die elektrische Maschine (4) von der Steuereinrichtung (6) über den Umrichter (5) an eine Versorgungsspannung (U) anschaltbar ist, die größer als 350 V ist, insbesondere größer als 1,0 kV, beispielsweise bis zu 4,5 kV.

6. Schienenfahrzeug, wobei das Schienenfahrzeug als Traktionsantrieb (2) einen elektrischen Antrieb nach Anspruch 5 aufweist.

## Claims

1. Coil of a stator winding (12) of an electric machine (4),
- wherein the coil is a flat coil, which consists of a number of windings (14), which are wound together with a number of layers of a mica tape (15), onto which in turn a number of layers of a cover tape (16) is wound,
- wherein the thus wound flat coil is subsequently embodied as a three-dimensional form-wound coil,
- the mica tape (15) has a bending stiffness of below 50 N/m according to DIN EN 60371-2 (version 2005) and between a top side and a bottom side thereof a static friction coefficient of below 0.7 according to DIN EN ISO 8295 (version 2004) and the cover tape (16) between a top side and a bottom side thereof has a static friction coefficient of below 0.7 according to DIN EN ISO 8295 (version 2004) and the cover tape (16) and the mica tape (15) are matched to one another so that with respect to the mica tape (15) the cover tape (16) has a static friction coefficient of below 0.7 according to DIN EN ISO 8295 (version 2004), wherein the cover tape (16) per se has two layers (17, 18), that one of these two layers (17, 18) is a fabric (17) and the other a film (18) in each case and that the fabric (17) consists of a glass fibre or of a first high-performance polymer and the film (18) consists of a second high-performance polymer.

2. Coil according to claim 1,
**characterised in that**
the mica tape (15) and the number of layers of the mica tape (15) are matched to one another so that the coil has a heat class of 200°C or better according to IEC 60034-18-31 (version 2017) .

3. Coil according to claim 1,
**characterised in that**
the second high-performance polymer is a polyimide.

4. Electric machine, wherein the electric machine has a stator (8) and a rotor (9), wherein the stator (8) has stator slots (11), into which a stator winding (12) is introduced, wherein the stator winding (12) has coils (13), wherein at least one of the coils (13) is embodied as a coil according to one of claims 1 to 3.

5. Electric drive, wherein the electric drive has an electric machine (4) according to claim 4, a converter (5) and a control facility (6) for the converter (5), wherein the electric machine (4) can be connected via the converter (5) to a supply voltage (U) by the control facility (6), said supply voltage being greater than 350 V, in particular greater than 1.0 kV, for instance up to 4.5 kV.

6. Rail vehicle, wherein the rail vehicle, as a traction drive (2), has an electric drive according to claim 5.

## Revendications

1. Bobine d'un enroulement (12) statorique d'une machine (4) électrique,
- dans laquelle la bobine est une bobine plane constituée d'un certain nombre de spires (14), qui sont enroulés conjointement avec un certain nombre de couches d'une bande (15) de mica sur laquelle est enroulé à son tour un certain nombre de couches d'une bande (16) de recouvrement,
dans laquelle
- la bobine plane ainsi enroulée est constituée ensuite sous la forme d'une bobine formée sur gabarit en trois dimensions,
- la bande (15) de mica a une résistance à la flexion suivant la norme DIN EN 60371-2 (état 2005) inférieure à 50N/m et a entre sa face supérieure et sa face inférieure un coefficient de frottement par adhérence suivant la norme DIN EN ISO 8295 (état 2004) inférieur à 0,7, et
- la bande (16) de recouvrement a entre sa face supérieure et sa face inférieure un coefficient de frottement par adhérence suivant la norme DIN EN ISO 8295 (état 2004) inférieure à 0,7 et la bande (16) de recouvrement et la bande (15) de mica sont adaptées l'une à l'autre de manière à ce que la bande (16) de recouvrement ait par rapport à la bande (15) de mica un coefficient de frottement par adhérence suivant la norme DIN EN ISO 8295 (état 2004) inférieur à 0,7, la bande (16) de recouvrement ayant en soi deux couches (17, 18), en ce que respectivement l'une de ces deux couches (17, 18) est un tissu (17) et une feuille (18) et en ce que le tissu (17) est en fibre de verre ou en un premier polymère à haute performance et la feuille (18) est en un deuxième polymère à haute performance.

2. Bobine suivant la revendication 1,
**caractérisée**
**en ce que** la bande (15) de mica et le nombre de couches de la bande (15) de mica sont adaptés l'un à l'autre de manière à ce que la bobine ait une classe de chaleur de 200°C ou mieux suivant la norme IEC 60034-18-31 (état 2017).

3. Bobine suivant la revendication 1,
**caractérisée**
**en ce que** le deuxième polymère a haute performance est un polyimide.

4. Machine électrique, dans laquelle la machine électrique a un stator (8) et un rotor (9), dans lequel le stator (8) a des encoches (11) statoriques dans lesquelles un enroulement (12) statorique est introduit, dans laquelle l'enroulement (12) statorique a des bobines (13), dans lequel au moins l'une des bobines (13) est constituée sous la forme d'une bobine suivant l'une des revendications 1 à 3.

5. Entraînement électrique, dans lequel l'entraînement électrique a une machine (4) électrique suivant la revendication 4, un onduleur (5) et un dispositif (6) de commande de l'onduleur (5), dans lequel la machine (4) électrique peut être branchée par le dispositif (6) de commande par l'intermédiaire de l'onduleur (5) sur une tension d'alimentation qui est plus haute que 350 V, notamment plus haute que 1,0 kV, en allant par exemple jusqu'à 4,5 kV.

6. Véhicule ferroviaire, dans lequel le véhicule ferroviaire a comme entraînement (2) de traction un entraînement électrique suivant la revendication 5.
